(19) Europäisches Patentamt
European Patent Office
Office européen des brevets

(11) Veröffentlichungsnummer: **0 000 184**
**B1**

(12) **EUROPÄISCHE PATENTSCHRIFT**

(21) Anmeldenummer: **78100222.5**

(22) Anmeldetag: **23.06.78**

(51) Int. Cl.³: **C 07 F 7/08,**
**C 07 F 7/12**

# (54) Verfahren zum Umwandeln von Organosilanen

(30) Priorität: **23.06.77 DE 2728196**

(43) Veröffentlichungstag der Anmeldung:
**10.01.79 Patentblatt 79/01**

(45) Bekanntmachung des Hinweises auf die Patenterteilung:
**23.07.80 Patentblatt 80/15**

(84) Benannte Vertragsstaaten:
**BE DE FR GB NL**

(56) Entgegenhaltungen:
**DE - B - 1 111 184**

(73) Patentinhaber: **Wacker-Chemie GMBH**
**Prinzregentenstrasse 22**
**D-8000 München 22 (DE)**

(72) Erfinder: **Graf, Werner, Dr.**
**Ludwig-Thoma-Strasse 21**
**D - 8263 Burghausen (DE)**
**John, Peter, Dr.**
**Marienberger Strasse 80**
**D - 8263 Burghausen (DE)**
**Frey, Volker, Dr.**
**Asternweg 7 a**
**D - 8263 Burghausen (DE)**

**EP 0 000 184 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zum Umwandeln von Organosilanen

Es ist bereits seit einiger Zeit bekannt, Organosilane durch Umsetzung von mindestens einem Silan (I) der allgemeinen Formel.

$$R_aSiCl_{4-a}$$

mit mindestens einem von (I) verschiedenen Silan (II) der allgemeinen Formel

$$R_bSiCl_{4-b}$$

wobei R jeweils gleiche oder verschiedene, von aliphatischen Mehrfachbindungen freie Kohlenwasserstoffreste mit 1 bis 10 Kohlenstoffatomen bedeutet, a 2, 3 oder 4 und b 0, 1, 2 oder 3 ist, umzuwandeln. Es ist auch bekannt, diese Umsetzung, die gemäß Noll, "Chemie und Technologie der Silicone", Weinheim, 1968, Seite 51/52, als "Coproportionierung" bezeichnet wird, durch Katalysatoren zu fördern. Zu diesen Katalysatoren gehören z. B. Alkalimetall-Komplexe von Organoaluminiumhalogeniden, wodei eines der als Reaktionsteilnehmer eingesetzten Silane Si-gebundenen Wassertoff enthalten kann (vlg. z. B. DE—AS 1 111 184, Anmelder: Imperial Chemical Industries Limited), die Kombination von Aluminiumchlorid und Silan mit mindestens einem Si-gebundenen Wasserstoffatom (vgl. z. B US–PS 27 86 861, ausgegeben; 23 März 1957, H. R. McEntee, assignor to General Electric Company, wobei diese US—PS der FR—PS 11 47 688, veröffentlicht: 28 November 1957, Anmelder: Compagnie Francaise Thomson-Houston, entspricht) und Organoaluminiumverbindungen der allgemeinen Formel

$$R^1_cAlY_{3-c}$$

wodei $R^1$ gleiche oder verschiedene Alkylreste mit 1 bis 4 Kohlenstoffatomen, Y Halogen, Wasserstoff und über Sauerstoff an das Aluminiumatom gebundene, von aliphatischen Mehrfachbindungen freie Kohlenwasserstoffreste mit 1 bis 10 Kohlenstoffatomen bedeutet und c 1, 2 oder 3 ist (vgl. z.B. GB—PS 8 51 868, veröffentlicht: 19. Oktober 1960, Anmelder: Imperial Chemical Industries Limited, wobei diese GB—PS der FR—PS 12 04 830 der gleichen Anmelderin, veröffentlicht; 28. Januar 1960, entspricht). Gegenüber vorbekannten Verfahren zum Coproportionieren von Silanen hat das erfindungsgemäße Verfahren z.B. die Vorteile, daß es ohne Anwendung von Uberdruck, bei niedrigeren Temperaturen und mit geringeren Mengen an Aluminiumverbindungen durchgeführt werden kann. Auch bei dem erfindungsgemäßen Verfahren können nicht die schon aus GB—PS 8 51 868 bekannten, mit der Verwendung von Aluminiumchlorid verbundenen Nachteile auftreten.

Bei Einsatz von Organosilanen ist auch bei dem Verfahren gemäß DT—OS 21 32 335, offengelegt: 5. Januar 1972, Anmelder: Union Carbide Corp., die Anwendung von Überdruck erforderlich.

Gegenstand der Erfindung ist ein Verfahren zum Umwandeln von Organosilanen durch Umsetzung von mindestens einem Silan (I) der allgemeinen Formel

$$R_aSiCl_{4-a}$$

mit mindestens einem von (I) verschiedenen Silan (II) der allgemeinen Formel

$$R_bSiCl_{4-b}$$

wobei R jeweils gleiche oder verschiedene, von aliphatischen Mehfachbindungen freie Kohlenwasserstoffreste mit 1 bis 10 Kohlenstoffatomen bedeutet, a 2, 3 oder 4 und b 0, 1, 2 oder 3 ist, in Gegenwart von mindestens einer Organoaluminiumverbindung der allgemeinen Formel

$$R^1_cAlY_{3-c}$$

wobei $R^1$ gleiche oder verschiedene Alkylreste mit 1 bis 4 Kohlenstoffatomen, Y Halogen, Wasserstoff oder über Sauerstoff an das Aluminiumatom gebundene, von aliphatischen Mehrfachbindungen freie Kohlenwasserstoffreste mit 1 bis 10 Kohlenstoffatomen bedeutet und c 1, 2 oder 3 ist, dadurch gekennzeichnet, daß mindestens ein Silan (III) der allgemeinen Formel

$$R_bH_cSiCl_{4-b-c}$$

wobei R, b und c jeweils die oben dafür angegebene Bedeutung haben mit der Maßgabe, daß die Summe von b + c höchstens 4 ist, und 0,1 bis 5 Gewichtsprozent, bezogen auf das Gesamtgewicht der Silane (I), (II) und (III), Halogenwasserstoff mitverwendet werden.

Aus GB—PS 9 15 479, veröffentlicht: 16. Januar 1963, Anmelder: Imperial Chemical Industries Limited, wobie diese GB—PS der FR—PS 13 04 434 der gleichen Anmelderin, veröffentlicht durch Bulletin officiel de la Propriété industrielle Nr. 38, 1962, entspricht, war bekannt, daß Chlorwasserstoff die Coproportionierung von Silanen in Gegenwart einer Kombination von Aluminiumchlorid und Silan mit Si-gebundenem Wasserstoff nachteilig beeinflußt. Die durch das erfindungsgemäße Verfahren erzielte Verbesserung ist also überraschend.

Beispiele für Kohlenwasserstoffreste R und Y sind Alkylreste, wie der Methyl-, Äthyl-, n-Propyl-, Isopropyl-, n-Butyl-, sec.-Butyl- und der 2-Äthylhexylrest sowie Decylreste; Cycloalkylreste, wie der Cyclohexylrest; Arylreste, wie der

Phenylrest; Aralkylreste, wie der Benzylrest; und Alkarylreste, wie Tolylreste.

Einzelne Beispiele für Silane der allgemeinen Formeln $R_aSiCl_{4-a}$ (I) und $R_bSiCl_{4-b}$ (II) sind Trimethylchlorsilan, Dimethyldichlorsilan, Methyltrichlorsilan, Diphenyldichlorsilan, Äthyltrichlorsilan, n-Propyltrichlorsilan, Phenyltrichlorsilan, n-Pentyltrichlorsilan, sec.-Pentyltrichlorsilan, Cyclohexyltrichlorsilan und Methyläthyldichlorsilan.

Weitere Beispiele für Silane (I) der allgemeinen Formel $R_aSiCl_{4-a}$ sind Tetramethylsilan und Tetraphenylsilan.

Das Silan (II) der allgemeinen Formel $R_bSiCl_{4-b}$ kann aber auch Tetrachlorsilan sein.

Vorzugsweise wird Silan (I) der allgemeinen Formel $R_aSiCl_{4-a}$ in Mengen von 0,8 bis 1,2 Mol je Mol Silan (II) der allgemeinen Formel $R_bSiCl_{4-b}$ eingesetzt.

Die Beispiele für Kohlenwasserstoffreste R und Y mit 1 bis 4 Kohlenstoffatomen gelten im vollen Umfang auch für die Kohlenwasserstoffreste $R^1$.

Ein weiteres Beispiel für Kohlenwasserstoffreste $R^1$ und Y ist der tert.-Butylrest.

Wegen der leichten Zugänglichkeit ist der Halogen Y Chlor bevorzugt. Halogenatome Y können aber auch Fluor, Brom oder Jod sein.

Einzelne Beispiele für im Rahmen des erfindungsgemäßen Verfahrens verwendbare Organoaluminiumverbindungen sind Äthylaluminiumsesquichlorid, Äthylaluminiumdichlirid, Trimethylaluminium, Methylaluminiumsesquichlorid, Diäthylaluminiumchlorid, Tri-n-propylaluminium, n-Propylaluminiumdichlorid, Di-n-butylaluminiumhydrid und Äthylaluminiumsesquiäthoxyd. Als Organoaluminiumverbindungen sind solche mit einem Siedepunkt über 150° C bei 760 mm Hg (abs.) bevorzugt. Wegen der leichten Zugänglichkeit ist Äthylaluminiumsesquichlorid besonders bevorzugt.

Es werden, insbesondere wenn die Anwesenheit auch von Spuren von Wasser ausgeschlossen wird, gute Ergebnisse schon mit 0,1 Gewichtsprozent, bezogen auf das Gesamtgewicht der Silane (I), (II) und (III), an Verbindung der allgemeinen Formel

$$R^1_cAlY_{3-c}$$

erzielt. Bevorzugt sind jedoch 0,8 bis 1,6 Gewichtsprozent, bezogen auf das Gesamtgewicht der Silane (I), (II) und (III), an Verbindung der allgemeinen Formel

$$R^1_cAlY_{3-c}$$

also beträchtlich geringere Menge als gemäß GB—PS 8 51 868 bevorzugt sind.

Größere Mengen an Verbindung der allgemeinen Formel

$$R^1_cAlY_{3-c}$$

z.B. 10 Gewichtsprozent oder mehr, können selbstverständlich ebenfalls eingesetzt werden, erbringen aber keinen Vorteil.

Einzelne Beispiele für Silane (III) der allgemeinen Formel $R_bH_cSiCl_{4-b-c}$ sind Silan, Methyldichlorsilan, Dimethylchlorsilan, Trichlorsilan und Monochlorsilan.

Vorzugsweise wird Silan (III) in Mengen von 0,5 bis 15 Gewichtsprozent, insbesondere 2 bis 6 Gewichtsprozent, jeweils bezogen auf das Gesamtgewicht der Silane (I) und (II), eingesetzt.

Insbesondere wegen der leichten Zugänglichkeit ist als Halogenwasserstoff Chlorwasserstoff bevorzugt. Statt Chlorwasserstoff oder im Gemisch mit Chlorwasserstoff kann aber auch Fluorwasserstoff, Bromwasserstoff und/oder Jodwasserstoff verwendet werden.

Das erindungsgemäße Verfahren kann bei Raumtemperatur und dem Druck der umgebenden Atmosphäre, also dei 760 mm Hg (abs.) oder etwa 760 mm Hg (abs.), durchgeführt werden. Selbstverständlich können auch höhere Temperaturen angewandt werden, z.B. bis zu 450° C. Das Verfahren verläuft dann noch rascher. Bevorzugt sind jedoch Temperaturen von höchstens 150° C. Falls die Anwendung höherer Temperaturen und die Siedepunkte der Reaktionsteilnehmer dies erfordern, kann auch Druck und/oder ein hocksiedendes Lösungsmittel, das gegenüber den übrigen Bestandteilen des Reaktionsgemisches inert ist, z.B. ein Gemisch aus Alkanen mit einem Siedepunkt von mindestens 150° C bei 760 mm Hg (abs.), verwendet werden.

Vorzugsweise wird der Zutritt von Wasser, soweit möglich, ausgeschlossen

Das erfindungsgemäße Verfahren kann absatzweise, halbkontinuierlich oder vollkontinuierlich durchgeführt werden.

In den folgenden Beispielen beziehen sich alle Angaben von Prozentsätzen auf das Gewicht, soweit nichts anderes angegeben ist.

## Beispiel 1

In einem Dreihalskolben, der mit Rührer, Rückflußkühler und Gaseinleitungsrohr ausgestattet ist, werden unter Rühren bei Raumtemperatur 2 l, gemessen bei 20° C und 720 mm Hg (abs.) und damit 1,5 %, bezogen auf das Gesamtgewicht der eingesetzten Silane, gasförmiger Chlorwasserstoff durch ein Gemisch aus 88 g (1 Mol) Tetramethylsilan, 129 g (1 Mol) Dimethyldichlorsilan, 2 g Methyldichlorsilan und 3 g Äthylaluminiumsesquichlorid innerhalb von 5 Minuten geleitet. Anschließend wird 5 Stunden bei Raumtemperatur weitergerührt. Danach wird die Zusammensetzung des Reaktionsgemisches gaschromatographisch bestimmt. Es werden folgende Ergebnisse erhalten:

| | % |
|---|---|
| Tetramethylsilan | 6 |
| Trimethylchlorsilan | 85,3 |
| Dimethyldichlorsilan | 8 |
| Methyldichlorsilan | 0,7 |

Beispiel 2

In dem Dreihalskolben, der mit Rührer, Rückflußkühler und Gaseinleitungsrohr ausgestattet ist wird unter Rühren bei Raumtemperatur 1 l, gemessen bei 20° C und 720 mm Hg (abs.) und damit 0,62 %, bezogen auf das Gesamtgewicht der eingesetzten Silane, gasförmiger Chlorwasserstoff durch ein Gemisch aus 149,5 g (1 Mol) Methyltrichlosilan, 108,5 g (1 Mol) Trimethylchlorsilan, 2,5 g Dimethylchlorsilan und 3 g n-Propylaluminiumdichlorid innerhalb von 5 Minuten geleitet. Danach wird 8 Stunden unter weiterem Rühren zum Sieden unter Rückfluß erwärmt. Schließlich wird die Zusammensetzung des Reaktionsgemisches gaschromatographisch bestimmt. Es werden folgende Ergebnisse erhalten:

| | % |
|---|---|
| Trimethylchlorsilan | 8 |
| Dimethyldichlorsilan | 83,7 |
| Methyltrichlorsilan | 8 |
| Dimethylchlorsilan | 0,3 |

Beispiel 3

In dem Dreihalskolben, der mit Rührer, Rückflußkühler und Gaseinleitungsrohr ausgestattet ist, werden unter Rühren Bei Raumtemperatur 2 l, gemessen bei 20° C und 720 mm Hg (abs.) und damit 0,94 %, bezogen auf das Gesamtgewicht der eingesetzten Silane, gasförmiger Chlorwasserstoff durch ein Gemisch aus 253 g (1 Mol) Diphenyldichlorsilan, 88 g (1 Mol) Tetramethylsilan, 3 g Trichlorsilan und 3 g Diäthylaluminiumchlorid innerhalb von 5 Minuten geleitet. Danach wird 4 Stunden unter weiterem Rühren zum Sieden unter Rückfluß erwärmt. Durch fraktionierte Destillation werden 30 g Trimethylchlorsilan, 35 g Phenyldimethylchlorsilan, 80 g Diphenylmethylchlorsilan und 74 g Triphenylchlorsilan erhalten.

Beispiel 4

In dem Dreihalskolben, der mit Rührer, Ruckflußkühler und Gaseinleitungsrohr ausgestattet ist, werden unter Rühren bei Raumtemperatur 2 l, gemessen bei 20° C und 720 mm Hg (abs.) und damit etwa 0,85 %, bezogen auf das Gesamtgewicht der eingesetzten Silan, gasförmiger Chlorwasserstoff durch eine Mischung aus 130 g Methyltrichlorsilan, 4 g Äthylaluminiumsesquichlorid und 250 g der unterhalb 50° C bei 760 mm Hg (abs.) siedenden Produkte der Umsetzung von Methylchlorid mit Silicium nach Rochow, wobei es sich um ein Gemisch aus 70 % Tetramethylsilan, 2,5 % Dimethylchlorsilan, 0,5 % Trichlorsilan und verschiedenen Kohlenwasserstoffen als mengenmäßig größten Restbestandteilen handelt, innerhalb von 8 Minuten geleitet. Danach wird 6 Stunden unter weiterem Rühren zum Sieden unter Rückfluß erwärmt. Durch fraktionierte Destillation werden 275 g Trimethylchlorsilan erhalten.

Vergleichsversuch 1

Die in Beispiel 1 beschriebene Arbeitsweise wird wiederholt mit der Abänderung daß kein Halogenwasserstoff mitverwendet wird. Bei der gaschromatographischen Bestimmung der Zusammensetzung des Reaktionsgemisches wird nur etwa 1 % Trimethylchlorsilan gefunden.

Vergleichsversuch 2

Die in Beispiel 2 beschriebene Arbeitsweise wird wiederholt mit der Abänderung, daß kein Silan mit Si-gebundenem Wasserstoff mitverwendet wird. Bei der gaschromatographischen Bestimmung der Zusammensetzung des Reaktionsgemisches werden nur weniger als 3 % Dimethyldichlorsilan gefunden.

**Patentansprüche**

1. Verfahren zum Umwandeln von Organosilanen durch Umsetzung von mindestens einem Silan (I) der allgemeinen Formel

$$R_aSiCl_{4-a}$$

mit mindestens einem von (I) verschiedenen Silan (II) der allgemeinen Formel

$$R_bSiCl_{4-b}$$

wobei R jeweils gleiche oder verschiedene, von aliphatischen Mehrfachbindungen freie Kohlenwasserstoffreste mit 1 bis 10 Kohlenstoffatomen bedeutet, a 2, 3 oder 4 und b 0, 1, 2 oder 3 ist, in Gegenwart von mindestens einer Organoaluminiumverbindung der allgemeinen Formel

$$R^1_cAlY_{3-c}$$

wobei $R^1$ gleiche oder verschiedene Alkylreste mit 1 bis 4 Kohlenstoffatomen, Y Halogen, Wasserstoff oder über Sauerstoff an das Aluminiumatom gebundene, von aliphatischen Mehrfachbindungen freie Kohlenwasserstoffreste mit 1 bis 10 Kohlenstoffatomen bedeutet und c l, 2 oder 3 ist, dadurch gekennzeichnet, daß mindestens ein Silan (III) der allgemeinen Formel

$$R_bH_cSiCl_{4-b-c}$$

wobei R, b und c jeweils die oben dafür angegebene Bedeutung haben mit der Maßgabe, daß die Summe von b + c höchstens 4 ist, und 0.1 bis 5. Gewichtsprozent, bezogen auf das Gesamtgewicht der Silane (I), (II) und (III) Halogenwasserstoff mitverwendet werden.

2. Verfahren nach Anspruch 1, dadurch gekennzeichnet, daß als Halogenwasserstoff Chlorwasserstoff verwendet wird.

**Revendications**

1. Procédé de transformation d'organosilanes par réaction d'au moins un silane (I) de la formule générale

$$R_aSiCl_{4-a}$$

avec au moins un silane (II) étant différent du silane (I) de la formule générale

$$R_bSiCl_{4-b}$$

R représentant chacun des radicaux hydrocarbures identiques ou différents, étant libres de composés multiples aliphatiques, et comportant 1 à 10 atomes de carbone, a étant 2, 3 ou 4, et b étant 0, 1, 2 ou 3 en présence d'au moins une combinaison organoaluminium de la formule générale

$$R^1_cAlY_{3-c}$$

dans laquelle $R^1$ resrésente des radicaux alkyle identiques ou différents, comportant 1 à 4 atomes de carbone, Y représente du halogène, de l'hydrogène ou des radicaux hydrocarbures comportant l à 10 atomes de carbone, étant libres de composés multiples aliphatiques, et releís à l'atome d'aluminium par l'intermédiaire de l'oxygène, c est égal à 1, 2 ou 3, caracterisé en ce que l'on utilise en outre au moins un silane (III) de la formule générale

$$R_bH_cSiCl_{4-b-c}$$

dans laquelle R,b et c correspondent chacun aux définitions précitées dans la mesure où la somme de b + c est au maximum 4, et 0.1 à 5% en poids—ces proportions étant rapportées à la quantité totale des silanes (I), (II) et (III)—de halide d'hydrogéne.

2. Procédé selon la revendication 1 caracterisé en ce qu'en tant que halide d'hydrogène, on utilise de l'acide chlorhydrique.

**Claims**

1. Process for converting organosilanes by reacting at least one silane (I) of the general formula

$$R_aSiCl_{4-a}$$

with at least one silane (II) being different from (I) of the general formula

$$R_bSiCl_{4-b}$$

wherein R each represent identical or different hydrocarbon radicals being free of aliphatic multiple bonds and having from 1 to 10 carbon atoms, a is 2, 3 or 4, and b is 0, 1, 2 or 3 in the presence of at least one organoaluminium compound of the general formula

$$R^1_cAlY_{3-c}$$

wherein $R^1$ represents identical or different alkyl radicals having from 1 to 4 carbon atoms, Y represents halogen, hydrogen or hydrocarbon radicals being bonded to the aluminium atom via oxygen, free of aliphatic multiple bonds and having from 1 to 10 carbon atoms, and c is 1, 2 or 3, *characterized in that* further at least one silane (III) of the general formula

$$R_bH_cSiCl_{4-b-c}$$

wherein R, b and c have the respective meaning mentioned above provided that the sum of b + c is maximally 4, and 0.1 to 5% by weight—calculated on the total weight of the silanes (I), (II) and (III)—of hydrogen halide are also used.

2. Process according to claim 1, *characterized in that* hydrogen chloride is used as hydrogen halide.